# EUROPÄISCHE PATENTSCHRIFT

(11) **EP 4 590 984 B1**
(45) Veröffentlichungstag und Bekanntmachung des Hinweises auf die Patenterteilung: **01.07.2026**
(21) Anmeldenummer: 23751855.0
(22) Anmeldetag: 01.08.2023
(51) Int. Cl.: F16H 57/04, G01K 1/143, G01K 1/16, G01K 11/165, F16H 57/032

(54) **GETRIEBE MIT GEHÄUSETEIL**
GEARING HAVING A HOUSING PART
ENGRENAGE COMPRENANT UNE PARTIE CARTER

(30) Priorität: 20.09.2022 DE 102022003467
(43) Veröffentlichungstag der Anmeldung: 30.07.2025
(73) Patentinhaber: SEW-EURODRIVE GmbH & Co. KG, 76646 Bruchsal (DE)
(72) Erfinder: LÄMSÄ, Mika, 03600 Karkkila (FI); NIKKILÄ, Arto, 12400 Tervakoski (FI)
(86) Internationale Anmeldenummer: PCT/EP2023/025362
(87) Internationale Veröffentlichungsnummer: WO 2024/061479

(56) Entgegenhaltungen:
- CN-U- 212 003 883
- DE-A1- 102020 201 515
- DE-A1- 19 734 418
- US-A1- 2013 250 303

## Beschreibung

Die Erfindung betrifft ein Getriebe mit Gehäuseteil.

Es ist allgemein bekannt, dass Getriebe Verlustleistungen aufweisen und daher sich im Betrieb erwärmen.

Aus der DE 20 2007 002 51 U1 ist eine Querfeldschrumpfvorrichtung bekannt.

Aus der DE 38 13 000 A1 ist ein Temperaturspitzenmelder mit bleibender Anzeige bekannt.

Aus der DE 20 2019 101 521 U1 ist ein elektronischer Temperaturmessstreifen zum Erfassen eines Temperaturprofils eines Wärmeträger-Speichers bekannt.

Aus der DE 100 39 015 C1 ist ein Verfahren zum Überwachen der Drehlager von Stranggießstützrollen bekannt.

Aus der DE 197 34 418 A1 ist ein Behälter für Montageschaum bekannt.

Aus der DE 10 2005 050 006 A1 ist ein Verfahren zur Ermittlung von Service-Intervallen in Getrieben bekannt.

Aus der DE 10 2020 201 515 A1 ist **als nächstliegender Stand der Technik** eine Getriebekasten-Temperaturmessvorrichtung bekannt.

**Aus der** CN 212 003 883 U **ist ein Schraubteil bekannt.**

**Aus der** US 2013/250303 A1 **ist ein Getriebe für einen Industrieroboter bekannt.**

Der Erfindung liegt daher die Aufgabe zugrunde, ein Getriebe weiterzubilden, wobei die Sicherheit erhöht werden soll.

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit Gehäuseteil vorgesehen ist, wobei ein Streifen an einem in das Gehäuseteil eingeschraubten Schraubteil befestigt ist, insbesondere wobei der Streifen auf das Schraubteil aufgeklebt ist,
insbesondere wobei das Schraubteil als Gehäusebauteil fungiert,
wobei der Streifen als Temperaturmessstreifen ausgeführt ist, welcher die Temperatur farbcodiert anzeigt und/oder welcher durch eine Farbanzeige die Temperatur kenntlich macht.

Von Vorteil ist dabei, dass das Schraubteil schnell und einfach austauschbar ist und durch das Einschrauben wärmeleitfähig verbunden ist. Insbesondere ist das Schraubteil ebenso wie auch das Gehäuseteil aus Metall ausgeführt. Darüber hinaus ist die Temperatur optisch direkt als Farbe erkennbar.
Erfindungsgemäß ist der Streifen also am Getriebe, insbesondere aufgeklebt, angeordnet ist,
wobei der Streifen als Temperaturmessstreifen ausgeführt ist.

Von Vorteil ist dabei, dass die erreichte Temperatur des Getriebes optisch anzeigbar ist. Dabei ist entweder die jeweils aktuelle Temperatur durch reversible Färbung eines dieser Temperatur zugeordneten Bereichs des Streifens erkennbar oder die im Zeitablauf zuvor maximal erreichte Temperatur durch irreversible Verfärbung eines entsprechenden Bereichs erkennbar.

Der Streifen ist als Klebestreifen ausführbar und somit leicht aufbringbar.

Bei einer vorteilhaften Ausgestaltung weist der Streifen thermosensitive Bereiche auf,
insbesondere wobei die thermosensitiven Bereiche voneinander beabstandet sind,
insbesondere welche jeweils einen Farbstoff aufweisen, der bei Überschreiten einer jeweiligen Temperatur eine reversible oder irreversible Farbänderung aufweist. Von Vorteil ist dabei, dass der Farbstoff eines jeweiligen Bereichs bei Überschreiten einer jeweiligen Temperatur reversibel oder irreversibel geändert wird, sodass das Überschreiten der Temperatur durch die Verfärbung des Bereichs optisch erkennbar wird.

Bei einer vorteilhaften Ausgestaltung ist der Streifen auf ein Schraubteil aufgeklebt, das in einen Innengewindebereich einer durch das Gehäuseteil durchgehenden Bohrung eingeschraubt ist. Von Vorteil ist dabei, dass mittels des Schraubteils eine verbesserte thermische Anbindung des Streifens an das Öl des Innenraumbereichs des Getriebes bewirkbar ist. Somit ist die erfasste Temperatur der Temperatur des Öls des Innenraumbereichs möglichst nahekommend.

Bei einer vorteilhaften Ausgestaltung ist die Bohrung eine Stufenbohrung,
wobei das Schraubteil einen Außengewindebereich aufweist, der in den Innengewindebereich eingeschraubt ist. Von Vorteil ist dabei, dass eine einfache Herstellung ermöglicht ist und das Einschrauben ein öldichtes Verbinden ermöglicht. Insbesondere durch Auftragen einer Lackschicht auf den Außengewindebereich vor dem Einschrauben in den Innengewindebereich, wobei die Lackschicht vorzugsweise auf Acrylatbasis hergestellt ist und mikroverkapselten ein- oder zweikomponentigen Klebstoff enthält, insbesondere sodass beim Einschrauben der Klebstoff aus den Mikrokapseln austritt und die stoffschlüssige dichte Verbindung zwischen dem Außengewindebereich und dem Innengewindebereich herstellt.

Bei einer vorteilhaften Ausgestaltung ist der Streifen auf einen ebenen Oberflächenbereich des Schraubteils aufgeklebt. Von Vorteil ist dabei, dass eine einfache Herstellung ermöglicht ist und eine sichere Klebeverbindung gewährleistbar ist.

Bei einer vorteilhaften Ausgestaltung weist das Schraubteil einen zweiten Bereich auf, welcher relativ zum Außengewindebereich verbreitert ausgeführt ist, insbesondere also einen bezogen auf die Schraubachse Radialabstandsbereich überdeckt, welcher den von dem Außengewindebereich überdeckten Radialabstandsbereich umfasst. Von Vorteil ist dabei, dass der zweite Bereich als Schraubenkopf ausführbar ist.

Bei einer vorteilhaften Ausgestaltung liegt der zweite Bereich an der Stufe der Stufenbohrung an. Von Vorteil ist dabei, dass einerseits eine wohldefinierte axiale Anschlagsposition das Schraubteil positioniert und andererseits eine Flachdichtung zwischen dem zweiten Bereich und dem Gehäuseteil anordenbar ist, welche vom Schraubteil an die Stufe angedrückt wird und somit eine öldichte Abdichtung bereitstellbar ist.

Bei einer vorteilhaften Ausgestaltung ist der Streifen auf einen ebenen Oberflächenbereich des Schraubteils, insbesondere des zweiten Bereichs, aufgeklebt. Von Vorteil ist dabei, dass eine einfache und sichere Aufbringung ermöglicht ist.

Bei einer vorteilhaften Ausgestaltung weist das Material des Schraubteils eine höhere spezifische Wärmeleitfähigkeit auf als das Material des Gehäuseteils. Von Vorteil ist dabei, dass der Streifen eine möglichst geringe Temperaturdifferenz zum Innenraum des Getriebes aufweist.

Bei einer vorteilhaften Ausgestaltung ist das Schraubteil aus Aluminium gefertigt. Von Vorteil ist dabei, dass der Streifen eine möglichst geringe Temperaturdifferenz zum Innenraum des Getriebes aufweist.

Bei einer vorteilhaften Ausgestaltung ist das Gehäuseteil aus einem Stahl, Stahlguss oder Eisenguss gefertigt. Von Vorteil ist dabei, dass das Gehäuseteil steif ausführbar ist, so dass hohe Kräfte ableiten kann.

Bei einer vorteilhaften Ausgestaltung ragt der Außengewindebereich des Schraubteils aus der Stufenbohrung in den Innenraum des Getriebes hervor. Von Vorteil ist dabei, dass der Streifen eine möglichst geringe Temperaturdifferenz zum Innenraum des Getriebes aufweist.

Bei einer vorteilhaften Ausgestaltung ist am Gehäuseteil eine Lageraufnahme ausgeformt, in welcher ein Lager zur drehbaren Lagerung einer Welle des Getriebes aufgenommen ist. Von Vorteil ist dabei, dass das Gehäuseteil hohe Kräfte ableitet und der Streifen in einem Abschnitt des Gehäuseteils anordenbar ist, in welchem das Gehäuseteil die geringste Wandstärke aufweist.

Bei einer vorteilhaften Ausgestaltung ist der Innenraum des Getriebes zumindest teilweise mit Öl befüllt. Von Vorteil ist dabei, dass bei Betrieb des Getriebes die Verzahnungsteile des Getriebes das Öl im Innenraum bewegen und daher die Temperatur im Innenraum angeglichen ist.

Bei einer vorteilhaften Ausgestaltung ist eine Lackschicht, insbesondere eine transparente Lackschicht, auf dem Streifen aufgebracht, welche auch das Schraubteil und das Gehäuseteil überdeckt. Von Vorteil ist dabei, dass das Getriebe samt Schraubteil und Streifen von einer Lackschicht umgeben ist und somit geschützt ist gegen Umwelteinflüsse. Bei einer alternativen vorteilhaften Ausgestaltung ist der Streifen auf ein Gehäuseteil des Getriebes aufgeklebt, insbesondere auf einen ebenen Oberflächenbereich des Gehäuseteils. Von Vorteil ist dabei, dass der Streifen einfach und sicherbar aufbringbar ist.

Weitere Vorteile ergeben sich aus den Unteransprüchen.

Die Erfindung wird nun anhand von schematischen Abbildungen näher erläutert:

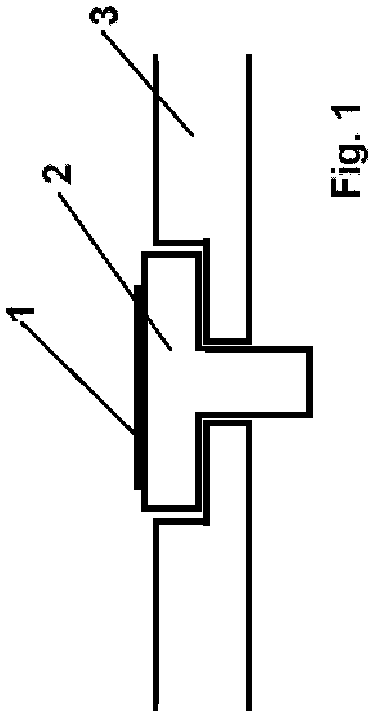

In der Figur 1 ist ein Querschnitt durch einen Abschnitt eines erfindungsgemäßen Getriebes dargestellt.

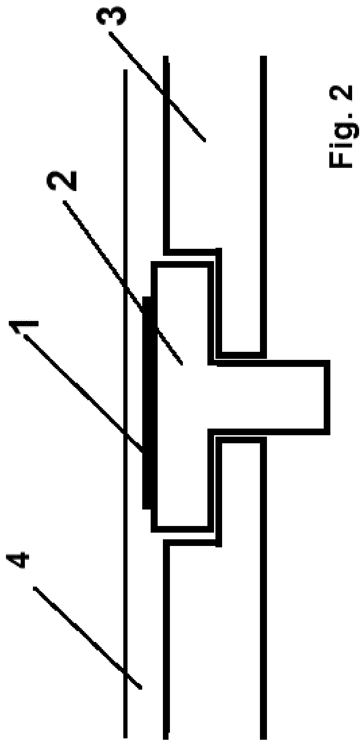

In der Figur 2 ist der Abschnitt des Getriebes mit einer zusätzlichen insbesondere transparenten Lackschicht 4 ausgeführt.

Wie in der Figur dargestellt, weist das Getriebe ein Gehäuseteil 3 auf, in welches eine durchgehende Stufenbohrung eingebracht ist, welche einen Innengewindeabschnitt aufweist.

Von der äußeren Umgebung herkommend, ist ein Schraubteil 2 in die Gewindebohrung eingeschraubt und dicht verbunden mit dem Gehäuseteil 3.

Der Innenraum des Getriebes ist zumindest teilweise mit Öl befüllt. Während des Betriebs weist der Innenraum infolge von Verlustleistung des Getriebes eine höhere Temperatur auf als die äußere Umgebung des Getriebes.

Das Schraubteil 2 ist mit seinem Außengewindebereich in den Innengewindeabschnitt eingeschraubt, wobei der verbreiterte Schraubenkopf des Schraubteils 2 in einem Abschnitt der Stufenbohrung aufgenommen ist, dessen lichter Innendurchmesser größer ist als der lichte Innendurchmesser des Innengewindeabschnitts der Stufenbohrung.

An der der äußeren Umgebung zugewandten Oberfläche des Schraubteils 2 ist ein Streifen 1 aufgeklebt, der thermosensitive Bereiche aufweist.

Der jeweilige dieser Bereiche weist einen Farbstoff auf, der bei Überschreiten einer jeweils speziell dem Farbstoff zugeordneten Temperatur-Schwellwerts eine sichtbare Farbänderung aufweist.

Somit ist die aktuelle Betriebstemperatur des Getriebes oder zumindest ein Bereich einer aktuell vorliegenden Temperatur optisch erkennbar.

Insbesondere ist der Streifen 1 als Temperaturmessstreifen, insbesondere Folienthermometer, ausgeführt.

Der Streifen 1 ist vorzugsweise selbstklebend gefertigt und auf den Schraubenkopf des Schraubteils 2 aufgeklebt.

Der jeweilige Farbstoff führt bei Erreichen einer jeweiligen Temperatur einen reversiblen Farbwechsel aus. Somit ist ein jeweiliger Temperaturbereich optisch ablesbar, in welchem sich die aktuelle Temperatur des Streifens 1 und/oder des Schraubteils 2 befindet.

Der jeweilige Farbstoff weist beispielsweise mikroverkapselte Flüssigkristalle auf.

Insbesondere ist das Schraubteil 2 aus einem Material ausgeführt, welches eine größere Wärmeleitfähigkeit aufweist als das Material des Gehäuseteils.

Vorzugsweise ist das Schraubteil 2 aus Aluminium gefertigt und das Gehäuseteil 3 aus Stahl. Somit ist die Temperaturdifferenz zwischen dem Streifen 1 und dem im Innenraum des Getriebes angeordneten Öl sehr gering. Erfindungsgemäß ist somit die Innentemperatur des Getriebes mittels des Streifens 1 sehr exakt anzeigbar.

Da der Schraubenkopf des Schraubteils 2 gegenüber dem Gewindebereich des Schraubteils 2 verbreitert ausgeführt ist, ist eine genügend große ebene Außenfläche auf dem Schraubenkopf des Schraubteils 2 bereitstellbar, um eine große Anzahl von Bereichen auf dem Streifen 1 unterzubringen. Insbesondere ist somit eine feingestufte, Temperaturanzeige ermöglicht. Denn jedem der Bereiche ist jeweils ein unterschiedlicher Temperatur-Schwellenwert zuordenbar, insbesondere indem die Farbstoffe entsprechend ausgewählt sind.

Das Gehäuseteil 3 weist einen ersten Abschnitt auf, der als Lageraufnahme zur Aufnahme eines Lagers einer Welle des Getriebes ausgeformt ist und der eine höhere Wandstärke aufweist als derjenige zweite Abschnitt, in welchem die Sacklochbohrung eingebracht ist.

Im zweiten Abschnitt weist das Gehäuseteil 3 die dünnste Wandstärke auf. Somit ist die Stufenbohrung in demjenigen Abschnitt des Gehäuseteils 3 angeordnet, welcher den geringsten Wärmeübergangswiderstand vom zumindest teilweise mit Schmieröl befüllten Innenraum des Getriebes zur äußeren Umgebung hinaufweist.

Vorzugsweise ragt das Schraubteil 2 an der Innenwand des Gehäuseteils 3 in den Innenraum des Getriebes hervor. Hierdurch ergibt sich ein weiter verbesserter Wärmekontakt, insbesondere ein vergrößerter Kontaktbereich, an welchem das Öl des Innenraums Wärme dem Schraubteil 1 zuleiten kann.

Alternativ ist der Streifen auf das Gehäuseteil 3, insbesondere auf einen ebenen Oberflächenbereich des Gehäuseteils 3, aufgeklebt.

Bei weiteren erfindungsgemäßen Ausführungsbeispielen wird das Getriebe lackiert, also das Gehäuseteil, das Schraubteil und der Streifen überlackiert, insbesondere also mit einer Lackschicht überzogen. Vorzugsweise ist die Lackschicht transparent ausgeführt, sodass eine Farbänderung der thermosensitiven Bereiche des Streifens von außen optisch erkennbar ist. Die Lackschicht ist in einem Arbeitsgang aufbringbar und/oder schützt das Gehäuseteil und/oder das Schraubteil vor Korrosion und den Streifen vor chemischen Umgebungseinflüssen.

Bei weiteren erfindungsgemäßen Ausführungsbeispielen wird der Farbstoff derart geeignet ausgeführt, dass die Farbänderung bei Überschreiten des Temperatur-Schwellwertes irreversibel ist. Wenn also beispielsweise der Bereich bei Überschreiten des Temperatur-Schwellwertes verfärbt, insbesondere sich von Grün in Rot verfärbt.

### Bezugszeichenliste

1 Streifen
2 Schraubteil
3 Gehäuseteil
4 Lack

## Patentansprüche

1. Getriebe mit Gehäuseteil (3),
**dadurch gekennzeichnet, dass**
ein Streifen (1) an einem in das Gehäuseteil (3) eingeschraubten Schraubteil (2) befestigt ist, insbesondere wobei der Streifen (1) auf das Schraubteil (2) aufgeklebt ist,
insbesondere wobei das Schraubteil (2) als Gehäusebauteil fungiert,
wobei der Streifen (1) als Temperaturmessstreifen ausgeführt ist, **welcher ausgeführt ist, die Temperatur farbcodiert anzuzeigen und/oder durch eine Farbanzeige die Temperatur kenntlich zu machen.**

2. Getriebe nach Anspruch 1,
**dadurch gekennzeichnet, dass**
der Streifen (1) thermosensitive Bereiche aufweist.

3. **Getriebe nach Anspruch 2,**
**dadurch gekennzeichnet, dass**
der Streifen (1) ein Klebestreifen ist.

4. **Getriebe nach Anspruch 2 oder 3,**
**dadurch gekennzeichnet, dass**
die thermosensitiven Bereiche voneinander beabstandet sind.

5. **Getriebe nach Anspruch 2, 3 oder 4,**
**dadurch gekennzeichnet, dass**
**die thermosensitiven Bereiche** jeweils einen Farbstoff aufweisen, **welcher ausgeführt ist, bei** Überschreiten einer jeweiligen Temperatur eine reversible oder irreversible Farbänderung **aufzuweisen.**

6. Getriebe nach einem der vorangegangenen Ansprüche,
**dadurch gekennzeichnet, dass**
der Streifen (1) auf das Schraubteil (2) aufgeklebt ist, das in einen Innengewindebereich einer durch das Gehäuseteil (3) durchgehenden Bohrung eingeschraubt ist.

7. **Getriebe nach Anspruch 6,**
**dadurch gekennzeichnet, dass**
die Bohrung eine Stufenbohrung ist,
wobei das Schraubteil (2) einen Außengewindebereich aufweist, der in den Innengewindebereich eingeschraubt ist.

8. Getriebe nach einem der vorangegangenen Ansprüche,
**dadurch gekennzeichnet, dass**
der Streifen (1) auf einen ebenen Oberflächenbereich des Schraubteils (2) aufgeklebt ist.

9. **Getriebe nach Anspruch 7,**
**dadurch gekennzeichnet, dass**
das Schraubteil (2) einen zweiten Bereich aufweist, welcher relativ zum Außengewindebereich verbreitert ausgeführt ist, insbesondere also einen bezogen auf die Schraubachse Radialabstandsbereich überdeckt, welcher den von dem Außengewindebereich überdeckten Radialabstandsbereich umfasst.

10. **Getriebe nach Anspruch 9,**
**dadurch gekennzeichnet, dass**
der zweite Bereich an der Stufe der Stufenbohrung anliegt.

11. **Getriebe nach Anspruch 9 oder 10,**
**dadurch gekennzeichnet, dass**
der Streifen (1) auf einen ebenen Oberflächenbereich des Schraubteils (2), insbesondere des zweiten Bereichs, aufgeklebt ist.

12. Getriebe nach einem der vorangegangenen Ansprüche,
**dadurch gekennzeichnet, dass**
das Material des Schraubteils (2) eine höhere spezifische Wärmeleitfähigkeit aufweist als das Material des Gehäuseteils (3).

13. Getriebe nach einem der vorangegangenen Ansprüche,
**dadurch gekennzeichnet, dass**
das Schraubteil (2) aus Aluminium gefertigt ist,
und/oder dass
das Gehäuseteil (3) aus einem Stahl, Stahlguss oder Eisenguss gefertigt ist.

14. **Getriebe nach einem der Ansprüche** 7, oder 8 bis 13 mit Bezug auf Anspruch 7,
**dadurch gekennzeichnet, dass**
der Außengewindebereich des Schraubteils (2) aus der Stufenbohrung in den Innenraum des Getriebes hervorragt.

15. Getriebe nach einem der vorangegangenen Ansprüche,
**dadurch gekennzeichnet, dass**
am Gehäuseteil (3) eine Lageraufnahme ausgeformt ist, in welcher ein Lager zur drehbaren Lagerung einer Welle des Getriebes aufgenommen ist.

16. Getriebe nach einem der vorangegangenen Ansprüche,
**dadurch gekennzeichnet, dass**
der Innenraum des Getriebes zumindest teilweise mit Öl befüllt ist.

17. Getriebe nach einem der vorangegangenen Ansprüche,
**dadurch gekennzeichnet, dass**
eine Lackschicht, insbesondere eine transparente Lackschicht, auf dem Streifen (1) aufgebracht ist, welche auch das Schraubteil (2) und das Gehäuseteil (3) überdeckt.

18. Getriebe nach Anspruch 1 oder 2,
**dadurch gekennzeichnet, dass**
der Streifen (1) auf ein Gehäuseteil (3) des Getriebes aufgeklebt ist, insbesondere auf einen ebenen Oberflächenbereich des Gehäuseteils (3).

## Claims

1. A gear unit with housing part (3),
**characterised in that**
a strip (1) is fastened to a screwing part (2) screwed into the housing part (3), in particular with the strip (1) being glued onto the screwing part (2),
in particular with the screwing part (2) acting as a housing component,
with the strip (1) being embodied as a temperature measurement strip which is embodied to indicate the temperature by colour coding and/or to identify the temperature by a colour indication.

2. A gear unit according to claim 1,
**characterised in that**
the strip (1) has thermosensitive regions.

3. A gear unit according to claim 2,
**characterised in that**
the strip (1) is an adhesive strip.

4. A gear unit according to claim 2 or 3,
**characterised in that**
the thermosensitive regions are spaced apart from each other.

5. A gear unit according to claim 2, 3 or 4,
**characterised in that**
the thermosensitive regions each have a dye which is embodied to exhibit a reversible or irreversible colour change upon a respective temperature being exceeded.

6. A gear unit according to one of the preceding claims,
**characterised in that**
the strip (1) is glued onto the screwing part (2), which is screwed into an internal thread region of a bore which passes through the housing part (3).

7. A gear unit according to claim 6,
**characterised in that**
the bore is a stepped bore,
with the screwing part (2) having an external thread region which is screwed into the internal thread region.

8. A gear unit according to one of the preceding claims,
**characterised in that**
the strip (1) is glued onto a flat surface region of the screwing part (2).

9. A gear unit according to claim 7,
**characterised in that**
the screwing part (2) has a second region which is embodied widened relative to the external thread region, in particular therefore covers a, relative to the screwing axis, radial distance region which encompasses the radial distance region covered by the external thread region.

10. A gear unit according to claim 9,
**characterised in that**
the second region lies against the step of the stepped bore.

11. A gear unit according to claim 9 or 10,
**characterised in that**
the strip (1) is glued onto a flat surface region of the screwing part (2), in particular of the second region.

12. A gear unit according to one of the preceding claims,
**characterised in that**
the material of the screwing part (2) has a higher specific thermal conductivity than the material of the housing part (3).

13. A gear unit according to one of the preceding claims,
**characterised in that**
the screwing part (2) is manufactured from aluminium,
and/or **in that**
the housing part (3) is manufactured from a steel, cast steel or cast iron.

14. A gear unit according to one of claims 7, or 8 to 13 with reference to claim 7, **characterised in that**
the external thread region of the screwing part (2) protrudes out of the stepped bore into the interior of the gear unit.

15. A gear unit according to one of the preceding claims,
**characterised in that**
on the housing part (3) there is formed a bearing receptacle in which a bearing for rotatably mounting a shaft of the gear unit is received.

16. A gear unit according to one of the preceding claims,
**characterised in that**
the interior of the gear unit is filled at least partly with oil.

17. A gear unit according to one of the preceding claims,
**characterised in that**
a lacquer layer, in particular a transparent lacquer layer, which also covers the screwing part (2) and the housing part (3) is applied to the strip (1).

18. A gear unit according to claim 1 or 2,
**characterised in that**
the strip (1) is glued onto a housing part (3) of the gear unit, in particular onto a flat surface region of the housing part (3).

## Revendications

1. Engrenage avec élément de carter (3), **caractérisé en ce qu'**une bande (1) est fixée à un élément vissé (2) vissé dans l'élément de carter (3), en particulier la bande (1) étant collée sur l'élément vissé (2), en particulier l'élément vissé (2) servant de composant de carter, la bande (1) étant réalisée comme bande de mesure de température, qui est réalisée pour indiquer la température par code couleur et/ou pour rendre visible la température par une indication de couleur.

2. Engrenage selon la revendication 1, **caractérisé en ce que** la bande (1) présente des zones thermosensibles.

3. Engrenage selon la revendication 2, **caractérisé en ce que** la bande (1) est une bande adhésive.

4. Engrenage selon la revendication 2 ou 3, **caractérisé en ce que** les zones thermosensibles sont espacées les unes des autres.

5. Engrenage selon la revendication 2, 3 ou 4, **caractérisé en ce que** les zones thermosensibles présentent chacune un colorant, qui est réalisé pour présenter un changement de couleur réversible ou irréversible lors du dépassement d'une température respective.

6. Engrenage selon l'une des revendications précédentes, **caractérisé en ce que** la bande (1) est collée sur l'élément vissé (2), lequel est vissé dans une zone filetée intérieure d'un perçage traversant réalisé par l'élément de carter (3).

7. Engrenage selon la revendication 6, **caractérisé en ce que** le perçage est un perçage étagé, l'élément vissé (2) présentant une zone filetée extérieure, qui est vissée dans la zone filetée intérieure.

8. Engrenage selon l'une des revendications précédentes, **caractérisé en ce que** la bande (1) est collée sur une zone de surface plane de l'élément vissé (2).

9. Engrenage selon la revendication 7, **caractérisé en ce que** l'élément vissé (2) présente une seconde zone, qui est réalisée élargie par rapport à la zone filetée extérieure, en particulier recouvrant ainsi, par rapport à l'axe de vissage, une zone d'écartement radial qui recouvre la zone d'écartement radial recouverte par la zone filetée extérieure.

10. Engrenage selon la revendication 9, **caractérisé en ce que** la seconde zone est en appui contre l'épaulement du perçage étagé.

11. Engrenage selon la revendication 9 ou 10, **caractérisé en ce que** la bande (1) est collée sur une zone de surface plane de l'élément vissé (2), en particulier de la seconde zone.

12. Engrenage selon l'une des revendications précédentes, **caractérisé en ce que** le matériau de l'élément vissé (2) présente une conductivité thermique spécifique plus élevée que le matériau de l'élément de carter (3).

13. Engrenage selon l'une des revendications précédentes, **caractérisé en ce que** l'élément vissé (2) est fabriqué en aluminium,et/ou **en ce que** l'élément de carter (3) est fabriqué en acier, acier moulé ou fonte.

14. Engrenage selon l'une des revendications 7, ou 8 à 13 en référence à la revendication 7, **caractérisé en ce que** la zone filetée extérieure de l'élément vissé (2) dépasse du perçage étagé dans l'espace intérieur de l'engrenage.

15. Engrenage selon l'une des revendications précédentes, **caractérisé en ce qu'** un logement de palier est formé sur l'élément de carter (3), dans lequel un palier pour le support rotatif d'un arbre de l'engrenage est logé.

16. Engrenage selon l'une des revendications précédentes, **caractérisé en ce que** l'espace intérieur de l'engrenage est au moins partiellement rempli d'huile.

17. Engrenage selon l'une des revendications précédentes, **caractérisé en ce qu'**une couche de laque, en particulier une couche de laque transparente, est appliquée sur la bande (1), qui recouvre également l'élément vissé (2) et l'élément de carter (3).

18. Engrenage selon la revendication 1 ou 2, **caractérisé en ce que** la bande (1) est collée sur un élément de carter (3) de l'engrenage, en particulier sur une zone de surface plane de l'élément de carter (3).
